Europäisches Patentamt

European Patent Office

Office européen des brevets

(11) Publication number: **0 290 750 B1**

## EUROPEAN PATENT SPECIFICATION

(45) Date of publication of patent specification: **19.01.94**　(51) Int. Cl.5: **G01J 1/50**, G03C 1/72

(21) Application number: **88104245.1**

(22) Date of filing: **17.03.88**

(54) **Systems for the visualization of exposure to ultraviolet radiation and for the utilization of ultraviolet radiation to effect color changes.**

(30) Priority: **19.03.87 US 27640**
　　　　**01.03.88 US 156601**

(43) Date of publication of application:
　　**17.11.88 Bulletin 88/46**

(45) Publication of the grant of the patent:
　　**19.01.94 Bulletin 94/03**

(84) Designated Contracting States:
　　**AT BE CH DE ES FR GB GR IT LI NL SE**

(56) References cited:
　　**DD-A- 126 450**　　　　**FR-A- 349 060**
　　**FR-A- 2 439 416**　　　**GB-A- 296 198**
　　**JP-A-54 123 944**　　　**US-A- 3 112 200**
　　**US-A- 3 121 632**　　　**US-A- 4 017 313**

　　**CHEMICAL AND ENGINEERING NEWS. vol. 64, no. 39, 29 September 1986, COLUMBUS US pages 77 - 78; R.Seltzer: "Indicator for perishable products developed"**

　　**DATABASE WPIL Derwent Publications London & JP-A-62009285 (Sumitomo Elec Ind. KK)(17.01.1987)7)**

(73) Proprietor: **XYTRONYX, INC.**
　　**6555 Nancy Ridge Drive, Suite 200**
　　**San Diego, CA 92121(US)**

(72) Inventor: **Mullis, Kary Banks**
　　**6767 Neptune Place 4**
　　**La Jolla California 92037(US)**

(74) Representative: **Brown, John David et al**
　　**FORRESTER & BOEHMERT**
　　**Franz-Joseph-Strasse 38**
　　**D-80801 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates generally to films for the visualization of exposure to ultraviolet radiation and for the utilization of ultraviolet radiation to effectuate visible color changes, and more particularly to films including a novel, two-step process responsive to ultraviolet radiation in which a photoacid is formed upon irradiation of a photoacid progenitor compound with ultraviolet light and wherein proton transfer to a dye causes the dye to undergo a visible color change. Specifically, the present invention provides for devices, materials, and objects which undergo visible color changes upon exposure to near ultraviolet light and which, if desired, undergo such color changes to an extent directly proportional to the cumulative mount of ultraviolet light incident thereupon. Films provided by the present invention allow for utilization of ultraviolet radiation to produce a broad range of color changes ("phototranschromic" effects) and are applicable, for example, in the quantitative detection of human exposure to the ultraviolet radiation component of sunlight.

Ultraviolet light is that portion of the electromagnetic spectrum adjacent to the short wavelengths, or violet end, of the visible light range. The ultraviolet spectrum is divided into two regions: the near ultraviolet (near the visible spectrum), with wavelengths 200 to 380 nm; and the far ultraviolet, with wavelengths 10 to 200 nm. Approximately ten percent of the energy from the sun is in the ultraviolet range.

The solar ultraviolet intensity at the earth's surface depends upon a variety of factors including: the thickness of the ozone layer in the upper atmosphere, ozone absorbing strongly between 200 and 300 nm; the latitude; the elevation above sea level; the atmospheric turbidity; the time of day; the time of year; and local conditions such as clouds, fog, dust, and smoke.

Human exposure to ultraviolet radiation can produce effects ranging from suntan, to sunburn, to skin cancer. While there are protective devices, including clothing, oil, ointments, and lotions, which either absorb or reflect ultraviolet radiation or reduce its penetration, there are no portable, inexpensive, disposable, readily available, simple, devices for detecting the extent of exposure to ultraviolet radiation. Accordingly, it is desirable to have such a device which the consumer can easily use to ascertain the total amount of ultraviolet exposure.

Exposure to ultraviolet radiation can be measured either directly using electronic devices, such as semiconductors, or indirectly using a spectrophotometer to quantitate the appearance or disappearance of a chemical species reactive to ultraviolet radiation.

The photochemically mediated detection or measurement of exposure to radiation, especially in the visible and ultraviolet range, is known as actinometry. A classical liquid phase actinometer is described in Hatchard, et al., Proc. Royal. Soc., A235:518 (1956) based on the photoreduction of ferrioxalate to form free ferrous ion which reacts with 1,10-phenanthroline causing a green to red color change. Frankenburger, et al., U.S. Patent No. 1,845,835, discloses an ultraviolet sensitive solution, containing leucocyanides, carbinols, and sulfurous compounds, which undergoes a direct, one-step, reversible color change upon exposure to ultraviolet light. These systems will not specifically measure ultraviolet radiation as they are also sensitive to longer wavelengths.

Pavlickova, et al., Col. Czechoslovak Chem. Comm., 51:368 (1986) describes a liquid phase actinometer based on the photohydrolysis reaction of 3,4-dimethoxynitrobenzene for the determination of ultraviolet light intensity. This liquid phase system does not have output in the visible range and is intended for use with a spectrophotometric device. Thus, utility in "field" applications is severely limited.

Reversible reactions have been suggested for use in actinometry. In the solution systems of Burg, U.S. Patent No. 3,561,969, for example, a light sensitive solution undergoes a direct, one-step, reversible color change with short exposures to white light. Actinometric complications and resultant inaccuracies are introduced by reversibility in such systems.

Solid state actinometers which rely on transformations of compounds showing no absorption in the visible range frequently have the disadvantage of requiring use of a spectrophotometer. Examples of such systems are found in Bunce, et al., J. Photochem., 23:219-231 (1983) and Bunce, et al., J. Photochem., 34:105-115 (1986) which disclose use of azoxybenzene in blocks of polymethylmethacrylate. Some solid state systems have the further disadvantage of requiring specially designed vacuum cells. For example, Cowell, et al., J. Am. Chem. Soc., 90:1106, (1968), discloses nitrobenzaldehyde in a film of polymethylmethacrylate as part of a system also requiring a spectrophotometer.

Disadvantages associated with some actinometric systems include their variable sensitivity and inability to discriminate among various wavelengths of radiation--some systems being responsive to broad ranges of radiation and others limited to narrow ranges. Several patents (e.g., Smith, U.S. Patent No. 3,929,488; Harper, et al., U.S. Patent No. 4,296,194; and Shelnut, et al., U.S. Patent No. 4,348,471) disclose a process which is used in lithographic print plate manufacture and which is responsive to a mixture of both ultraviolet and visible light. Not only is the process not specific for ultraviolet radiation, it does not have a dynamic range of responsiveness, is extremely reactive to low levels of radiation, and utilizes unstable diazonium compounds which are dangerous if they come in contact with the skin. In contrast, Schmidt, et al., J. Photochem., 25:489-499 (1984) describes two systems specific for two distinct regions of ultraviolet light. One system, the photoxidation of meso-diphenylhelin athrene, is recommended for the 475-610 nm range and a second system, including the photoreversible photocycle reversion of the endoperoxide of heterocoerdianthrone, is suited for re-usable actinometry in the 248-334 nm range. Again, systems such as these which require a photometer are disadvantageous because their "output" can not be visualized. Further, the compounds employed are both expensive and potentially carcinogenic.

Another system responsive to both visible and ultraviolet radiation utilizes photoactivators or photosensitizers which enhance the density of image formation upon exposure of leuco dyes to short periods of ultraviolet light without affecting the leuco dyes' reactivity to visible light. See, e.g., Sprague, et al., U.S. Patent No. 3,121,632. Yet another system responsive to both visible and ultraviolet radiation is Wainer, U.S. Patent No. 3,112,200. Upon a several seconds exposure to light (250-400 nm), the halogen-containing compound of the dry photographic film is converted to a free radical, which leads to the production of significant amounts of acid and water, thereby resulting in a visible color change in the acid-base type indicator dispersed throughout the film. Still another system responsive to both visible and ultraviolet radiation is disclosed in Zweig, U.S. Patent No. 3,903,423. Zweig discloses two systems; the first uses oxzolidine-diones which darken only in response to radiation shorter than 320 nm; the second system uses photochromic cyclohexadiene compounds, such as xanthenones, which absorb not only from 320 nm and shorter, but also absorb at wavelengths longer than 320 nm, thereby requiring a filter to protect the system from longer wavelength radiation, such as visible light.

Some measurement systems which do not require a photometer to determine the amount of radiation exposure are simultaneously sensitive to both far ultraviolet radiation and ionizing radiation and insensitive to near ultraviolet radiation and therefore cannot be used for the selective measurement of exposure to near ultraviolet radiation. For example, McLaughlin, Intl. J. of Applied Radiation and Isotopes, 17:85-96 (1966), discloses pre-activated colorless cyanides of triphenylmethane dyes, which can be made into films which, upon irradiation with far ultraviolet or ionizing radiation change from a colorless to colored state. See also, McLaughlin, et al., U.S. Patent No. 4,006,023. Similarly, Cerami, et al., U.S. Patent No. 4,466,941 discloses a composition comprising a complex of leucocyanide and serum albumin which, upon exposure to x-rays, gamma rays, and/or other short wave length radiation including, ultraviolet radiation, results in the appearance of color.

Systems for detecting ionizing radiation wherein exposure to ionizing radiation causes a halogen-containing compound to form an halo-acid which in turn causes an acid-sensitive dye to change color are disclosed in numerous patents. See, e.g., Vale, et al., U.S. Patent No. 3,290,499; Huebner, et al., U.S. Patent No. 3,691,380; Matsumoto, et al., U.S. Patent No. 3,743,846; Hori, et al., U.S. Patent No. 3,899,677; and most recently, Lemahieu, et al., U.S. Patent No. 4,008,085. In general, these systems are either heat sensitive or visible light sensitive. To the extent that they display ultraviolet light sensitivity, none are noted to be specific for ultraviolet light detection. None of these systems is suitable for use in applications requiring low toxicity.

Reversible photochromic materials useful in the preparation of photochromic plastic films, sheets, and opthalmic lenses and rapidly responsive to exposure to light are disclosed in Uhlmann, et al., U.S. Patent No. 4,012,232 and Wagner, et al., U.S. Patent No. 3,666,352. Generally these materials change their transmission or reflectance upon being subjected to ultraviolet or visible irradiation and subsequently revert to their original state upon exposure to a different wavelength of radiation, or removal of the initial light source. Photochromic polymers capable of undergoing reversible changes between two chemical species induced by light absorption can be used for reversible optical information storage and have been suggested for actinometric uses in badges to detect unsafe levels of ultraviolet exposure. Wilson, Phys. Technol., 15:233 (1984). However, such a suggestion does not take into account the reversibility of the reaction nor the responsiveness of the reaction to visible light and resultant erroneous readings obtained when attempting to ascertain the extent of ultraviolet exposure.

Chem. Eng. & News, 64:77 (September 1986), reports that a system for indication of the passage of time and exposure to elevated temperatures is being developed as a spoilage indicator for perishable products. The indicators consist of filter paper dipped in a solution containing a leuco base dye and ortho-nitrobenzaldehyde. Commencing with a discrete photoactivation step, an oxidation process causes the indicator to begin to undergo a progressive color change in the acidified environment which is both time and temperature dependent. The rate at which the color change appears can be adjusted in accordance with the shelf-life of any given product so that a color change appears more quickly for some goods having a short shelf-life. Visible light above 400 nm does not activate the system. Upon photoactivation, the dyestuff reaction of this system is responsive to the passage of time and increased temperature; however, the system cannot measure the extent of exposure to ultraviolet radiation.

DD-A-126450 discloses a polymer film containing an original halogen compound, from which hydrohalic acid may be radiolytically generated, an indicator dye and a buffering agent.

In sum, numerous actinometric devices and systems have been proposed in the prior art. None has been totally responsive to the need in the art for systems allowing ready visualization of cumulative exposure to ultraviolet light which are easily constituted from relatively inexpensive and non-toxic components and which display specificity for ultraviolet light and relative insensitivity to heat and the passage of time.

## BRIEF SUMMARY OF THE INVENTION

The present invention provides novel photochemical films for visualization of ultraviolet radiation. Films of the invention are quantitatively responsive to ultraviolet radiation and, in general, comprise a compound capable of forming an acid upon exposure to near ultraviolet radiation (i.e., a "photoacid progenitor compound") and a dyestuff which is capable of undergoing a color change upon acidification. These two system components are admixed in a medium allowing the transfer of protons to the dyestuff, and thus allowing the dyestuff to undergo a visible color change in proportion to the amount of ultraviolet radiation incident thereon.

Presently preferred films according to the invention involve use of photogenerated acid progenitor compounds which undergo transformation to photoacids upon exposure to irradiation in the near ultraviolet range. photogenerated acid progenitor compounds of this type are nitro substituted aromatic aldehydes, wherein the nitro group is in an ortho position with respect to the aldehyde group. Illustrative photoacid progenitors are ortho-nitrobenzaldehyde; 2,4-dinitrobenzaldehyde; 2,6-dinitrobenzaldehyde; and ortho-nitrocinnamaldehyde. The use of mixtures of photogenerated acid progenitors (hereinafter referred to as photoacid progenitors) is also within contemplation of the present invention.

A wide variety of dyestuffs is suitable for use in films of the present invention. These may be initially colored or colorless; soluble in organic or aqueous solutions; and subject to one or more color changes over a range of pH values. Dyes sensitive to changes in pH may be used singly, or in combination with each other, or with dyes relatively insensitive to changes in pH to produce a broad range of color changes ("phototranschromic" effects).

Media useful in preparations of films according to the invention and which allow for tranfer of protons from a photoacid formed therein to a dyestuff, preferably include a dispersion agent such as polyvinyl alcohol, ethoxy-ethoxy-ethanol, polyvinyl acetate, silicone, diethylene glycol, and water.

In certain preferred embodiments of the invention, the medium includes a solubilizer for the photoacid progenitor (e.g., an adduct forming agent such as sodium meta bisulfite), a pH adjuster, (such as sodium hydroxide), an anti-oxidant (such as hexamethylenetetramine, and/or an organic or aqueous buffering agent. Suitable buffering agents include Tris-HCl, sodium deoxycholate, and sodium phosphate.

The relative proportions of photoacid progenitor, dyestuff, medium, solubilizer, pH adjuster and buffer are subject to wide variations depending upon the particular use contemplated.

There are disclosed photochemical systems which take the form of films, fibers, fluids, including curable elastometric fluids, and may also be in the form of porous solid supports (e.g., a diethylaminoethyl cellulose) to which solutions of the photoacid progenitor and dyestuff have been applied. In addition, these varieties of forms can be suitably juxtaposed to create differential and unusual color changes as a result of the juxtapositions.

In general, films according to the present invention are responsive to numerous long standing needs in the art in that they allow for the ready visualization of cumulative exposure to ultraviolet light. As will be apparent from consideration of the following, films of the invention are easily constituted from relatively inexpensive and relatively non-toxic components. Moreover, actinometric devices based upon films of the present invention display a high degree of specificity for ultraviolet radiation and are relatively insensitive to heat and the passage of time.

Other aspects and advantages of photoacid films of the present invention will be apparent upon consideration of the following detailed description thereof which includes numerous illustrative examples of practice of the invention.

4

## DETAILED DESCRIPTION

The following examples illustrate practice of the invention in the production of materials which undergo visible color changes upon exposure to near ultraviolet light. Also illustrated are materials which can be constructed to undergo this color change to an extent directly proportional to the cumulative amount of ultraviolet light incident upon the materials and which can be variously constructed to differ in terms of initial, intermediate, and finally responsive color states and in terms of the total amount of ultraviolet exposure required for a visible color change to occur. Examples are given of materials which can be made into films, extruded into fibers, formed into objects, or formulated as inks and paints and the like. Also illustrated are exemplary systems allowing for the convenient measurement of the extent of ultraviolet illumination reaching a particular location, object, or person which can be readily used as a means for monitoring personal exposure to ultraviolet light from various sources, including the sun. Various other uses are anticipated.

More specifically, Examples 1-5 illustrate the preparation of plastic films and other thin layers or solid objects which exhibit phototranschromic effects. Examples 6-10 illustrate the use of multiple photoacid progenitors. Example 11 demonstrates the very broad range of dyes which can be effectively utilized. Example 12 illustrates the use of a solubilizer. Examples 13-20 illustrate the use of buffers, and pH adjusters to modify aspects of the dyestuff color change reaction. Examples 21-27 relate to additional specific examples illustrating procedures for making phototranschromic films, inks, toys, and imaging materials. Example 28 relates to the preparation and use of crystalline ortho-nitrobenzaldehyde bisulfite adduct; Example 29 relates to the preparation of multilaminate films; Example 30 relates to the preparation of very thin films; and Example 31 relates to the use of an anti-oxidant.

The following examples, Examples 1-8 illustrate the preparation of plastic films and other thin layers or solid objects which exhibit phototranschromic effects, but wherein a bisulfite adduct of the photoacid progenitor is not employed.

## EXAMPLE 1

Solutions for use in making films and other thin layers according to the invention, containing ortho-nitrobenzaldehyde and polyvinyl alcohol, are prepared as follows. Seven hundred mg of polyvinyl alcohol (molecular weight, ca. 86,000, Aldrich Chemical Co., Milwaukee, Wisconsin) is dissolved in 10 ml of boiling water and 15.5 mg (10 mM) ortho-nitrobenzaldehyde is added to the still hot solution. The solution is made 1 mM with respect to any one of the dyes set out in Table 1, below. The pH of the solution is adjusted until the dye is in its basic form by addition of 1 M sodium hydroxide in the volumes indicated.

### TABLE 1

| INDICATOR DYE | microliters 1 M NaOH |
|---|---|
| 1. bromothymol blue | 60 |
| 2. ethyl red | 40 |
| 3. m-cresol purple | 60 |
| 4. neutral red | 60 |
| 5. chlorophenol red | 30 |
| 6. bromocresol green | 0 |
| 7. methyl red | 30 |
| 8. bromophenol red | 20 |
| 9. hematoxylin | 60 |
| 10. alizarin | 30 |
| 11. propyl red | 30 |
| 12. bromophenol blue | 0 |

In Example 2, a solution of an ultraviolet reactive compound, such as ortho-nitrobenzaldehyde, an acid-sensitive dye as set out in Table 1, and a medium, such as polyvinyl alcohol, is applied to a flat surface and allowed to evaporate, leaving a thin plastic film. Such a film is initially either blue or green, depending upon the pH adjustment of the initial solution. Upon exposure to near ultraviolet light, the ortho-nitrobenzaldehye is converted to ortho-nitrosobenzoic acid, the acid stoichiometrically converts the dye, e.g., from its basic to its acid form, and the color of the film changes. Bromothymol blue, for example, changes from blue to green-yellow to yellow depending upon the length of exposure.

**EXAMPLE 2**

This example demonstrates the color changes observed for twelve different films all having different indicator dyes upon exposure to 0, 15, or 60 minutes of solar illumination.

Three 25 $\mu$L aliquots of any one of the solutions described in Example 1 are pipetted onto a glass plate and allowed to air dry for approximately one hour. The dried films are subjected to 0, 15 or 60 minutes of solar illumination on a clear February day in San Diego, CA. and the colors noted. The observed color changes are listed in Table 2.

## TABLE 2

OBSERVED COLOR

| INDICATOR DYE | Initial Color | 15 min. Sunlight | 60 min. Sunlight |
|---|---|---|---|
| 1. bromothymol blue | blue | green-yellow | yellow |
| 2. ethyl red | yellow | red-yellow | red |
| 3. m-cresol purple | lilac | yellow | yellow |
| 4. neutral red | orange | orange | orange |
| 5. chlorophenol red | purple | yellow-purple | yellow-purple |
| 6. bromocresol green | blue | lt. blue | green-blue |
| 7. methyl red | yellow | yellow-red | red |
| 8. bromophenol red | purple | purple-yellow | purple-yellow |
| 9. hematoxylin | red | orange | lt. orange |
| 10. alizarin | lt. purple | v. lt. purple | white |
| 11. propyl red | yellow | red-yellow | red-orange |
| 12. bromophenol blue | blue | blue | blue |

The following example, Example 3, relates to the use of ultraviolet sensitive solutions which can be applied to surfaces such as cloth, paper, cardboard, plastics, wood, metals, and the like.

**EXAMPLE 3**

To 10 ml of acetone 10% in polyvinyl acetate, (medium molecular weight, Aldrich Chemical Co., Milwaukee, Wisconsin) and 100 mM in ortho-nitrobenzaldehyde was added 300 $\mu$L of a 100 mM suspension of bromothymol blue in ethanol giving a final 3 mM dye concentration. 200 $\mu$L of 1 M NaOH in water was added with thorough shaking. This solution was loaded into a paint sprayer of the air brush type and applied to a cardboard surface which had been previously washed with ammonium hydroxide and air dried. Thus applied, the solution formed a blue, slightly tacky, layer which rapidly dried to the touch. When placed in direct sunlight for 30 minutes, the color changed from blue through green to yellow.

The following example, Example 4, demonstrates that an appropriate solid support can be employed onto which a buffer may be applied in a complex pattern.

### EXAMPLE 4

A 20x20 cm plastic-backed diethylaminoethyl cellulose thin layer chromatography sheet (Baker-flex, J.T. Baker Chemical Co.; Phillipsburg, New Jersey) was placed in an ink jet printer such as a Canon PJ 1080A and imprinted with a pattern using a 100mM solution of sodium deoxycholate in water rather than using ink. The printed sheet was then coated with a solution of 2-ethoxy-ethoxy-ethanol, 1 mM in bromothymol blue in its basic form, and 10 mM in ortho-nitrobenzaldehyde by spraying with an air brush. A Saran™ membrane was laid over the still moist film. On exposure to ultraviolet light the image of the deposited buffer could be discerned by its retardant effect on the acidification of the indicator dye.

Various moldable plastics can also be used as the support medium as demonstrated in Example 5.

### EXAMPLE 5

To 10 ml of Petrarch SS curable silicone dispersion (Petrarch Systems, Inc., Bristol, Pennsylvania) was added 100 mg ortho-nitrobenzaldehyde (66 mM) and 100 $\mu$L of a 100 mM solution of erythrosin B. The dispersion was vortexed thoroughly and 4 ml was applied to a clean glass plate and allowed to dry for eight hours. The remainder was left in a 20 ml vial, wherein it congealed into a soft, pliable, dry, but slightly sticky pellet. The pellet and the film from the glass plate were placed under ultraviolet illumination for twenty minutes in which time the exposed film turned from cherry red to a light pink and the exposed surface, but not the interior, of the pellet did likewise.

The following example, Example 6, compares the in situ reactivity of 2,4-dinitrobenzaldehyde to that of ortho-nitrobenzaldehyde in the same medium and with the same dye and demonstrates that the former aldehyde is also an effective proton progenitor compound for use in systems of the invention.

### EXAMPLE 6

To 20 ml of a 10% solution of polyvinylacetate (medium molecular weight, Aldrich Chemical Co., Milwaukee, Wisconsin) in ethoxyethoxyethanol, was added 196 mg of 2,4-dinitrobenzaldehyde (50 mM) and, with considerable agitation to effect complete dissolution, 200 $\mu$L of a 100 mM aqueous solution of erythrosin B and 100 $\mu$L of a 1 M solution of sodium hydroxide.

A second solution was prepared similarly except for the substitution of 151 mg of ortho-nitrobenzaldehyde for the 2,4-dinitrobenzaldehyde. Both solutions were poured onto clean glass plates and allowed to evaporate for 24 hours at room temperature. Representative strips from each film were placed in direct noontime sunlight for two hours. The film containing the 2,4-dinitrobenzaldehyde turned from an intense, fluorescent fuchsia to a quiescent golden yellow. The film containing the ortho-nitrobenzaldehyde turned a reddish-orange indicative of only partial acidification of the dye.

The following two examples, Example 7 and Example 8, demonstrate the use of 2,4-dinitrobenzaldehyde with two different dyes, erythrosin B and propyl orange.

### EXAMPLE 7

An acetone solution, 10% in polyvinylacetate, (medium molecular weight, Aldrich Chemical Co., Milwaukee, Wisconsin), 100 mM in 2,4-dinitrobenzaldehyde, and 1 mM in erythrosin B was poured onto a clean glass plate and allowed to evaporate into a thin film. When placed in direct sunlight for 45 minutes the film turned from a light fuchsia to a tangerine pink.

### EXAMPLE 8

A similar film, made as in the preceeding example, Example 7, but with 3 mM propyl orange and 5 mM NaOH, turned from an intense orange to an intense orange-red.

The following examples, Example 9 and Example 10, demonstrate that the amount of acid generated upon exposure to ultraviolet light is proportional to the exposure time and also depends upon the amount of photoacid progenitor substrate remaining as the reaction progresses.

### EXAMPLE 9

Acidity generated by ultraviolet exposure of a polyvinyl alcohol film containing the ortho-nitrobenzaldehyde (ONB) bisulfite adduct (prepared according to Example 12, described below) is quantitated by titration with 10 mM NaOH. Solutions I-IV, made from aqueous solutions in the volume proportions listed in Table 3, are applied to clean glass plates where they are allowed to evaporate, depositing thin clear films on the plates.

## TABLE 3

|  | SOLUTIONS | | | |
| COMPONENT | I | II | III | IV |
| --- | --- | --- | --- | --- |
| 500 mM ONB sodium bisulfite complex | 5 | 10 | 5 | 5 |
| 8% polyvinyl alcohol | 40 | 40 | 40 | 40 |
| 100 mM bromothymol blue | 0 | 0 | 0.5 | 0 |
| 100 mM propyl red | 0 | 0 | 0 | 1.5 |
| water | 5 | 0 | 4.5 | 3.5 |
| 1 M NaOH | 0.5 | 0.5 | 0.5 | 0.5 |

After 8 hours drying, squares 1″ × 1″ are cut from the films and weighed. These are exposed to a Fotodyne, (New Berlin, Wisconsin) ultraviolet transilluminator for periods of 0 to 240 minutes after which they are dissolved in 4 ml of water and titrated with 10 mM NaOH to the pH observed for the time zero control. In the tables below, Tables 4, 5, 6, and 7, initial pH is the pH of the exposed, dissolved, square prior to titration.

## TABLE 4

Solution I; titrated to control pH 7.80
(50 mM ONB and no dye)

| Time (min) | Weight (mg) | Initial pH | Micromoles/gram required |
|---|---|---|---|
| 10 | 38.6 | 5.31 | 88 |
| 20 | 36.7 | 4.60 | 155 |
| 40 | 34.7 | 3.97 | 202 |
| 80 | 34.8 | 3.82 | 287 |
| 160 | 35.7 | 3.65 | 328 |
| 240 | 33.2 | 3.63 | 340 |

## TABLE 5

Solution II; titrated to control pH 7.09
(100 mM ONB and no dye)

| Time (min) | Weight (mg) | Initial pH | Micromoles/gram required |
|---|---|---|---|
| 10 | 57.4 | 4.84 | 96 |
| 20 | 55.6 | 4.43 | 140 |
| 40 | 58.0 | 4.32 | 157 |
| 80 | 55.2 | 4.06 | 199 |
| 160 | 57.5 | 3.88 | 231 |
| 240 | 51.8 | 3.76 | 290 |

## TABLE 6

Solution III; titrated to control pH 7.65
(50 mM ONB and 1 mM bromothymol blue)

| Time (min) | Weight (mg) | Initial pH | Micromoles/gram required |
|---|---|---|---|
| 10 | 37.7 | 5.32 | 98 |
| 20 | 36.3 | 4.88 | 151 |
| 40 | 39.1 | 4.69 | 169 |
| 80 | 38.3 | 4.44 | 204 |
| 160 | 34.8 | 4.17 | 276 |
| 240 | 33.2 | 4.06 | 292 |

## TABLE 7

### Solution IV; titrated to control pH 7.43
### (50 mM ONB and 3 mM propyl red)

| Time (min) | Weight (mg) | Initial pH | Micromoles/gram required |
|---|---|---|---|
| 10 | 33.7 | 5.97 | 77 |
| 20 | 36.5 | 5.24 | 93 |
| 40 | 38.3 | 4.86 | 128 |
| 80 | 36.7 | 4.63 | 153 |
| 160 | 36.3 | 4.42 | 212 |
| 240 | 37.8 | 4.26 | 193 |

### EXAMPLE 10

A repetition of the preceeding example, Example 9, was performed substituting 2,4-dinitrobenzaldehyde for ortho-nitrobenzaldehyde. However, due to the lower solubility of the 2,4-dinitrobenzaldehyde bisulfite adduct, it was not possible to prepare a 500 mM stock solution. Thus, 1.4 ml 1M sodium bisulfite was added to 24 ml 8% polyvinyl alcohol, and to this solution was added, with heating, 250 mg 2,4-dinitrobenzaldehyde. The solution, 50 mM in 2,4-dinitrobenzaldehyde, was poured onto a clean glass plate and evaporated during which time some of the aldehyde crystallized in the film. Squares cut from this film were treated as those in Example 9 and were titrated to a control pH of 5.18. The following results were obtained.

## TABLE 8

| Time (min) | Weight (mg) | Initial pH | Micromoles/gram required |
|---|---|---|---|
| 10 | 57.9 | 4.58 | 20 |
| 20 | 48.5 | 4.25 | 33 |
| 40 | 52.1 | 4.00 | 46 |
| 80 | 57.8 | 3.61 | 66 |
| 160 | 51.7 | 3.49 | 77 |
| 240 | 56.9 | 3.33 | 98 |

A very broad range of dyes can be effectively utilized as illustrated in Example 11.

### EXAMPLE 11

The pH sensitive dyes in the following table were dissolved to a concentration of 1 mM (unless otherwise noted) in solutions which were 50 mM in ortho-nitrobenzaldehyde-bisulfite adduct (prepared according to Example 12, described below), and 7.2% in polyvinyl alcohol. One molar sodium hydroxide was added to the solutions until the dyes were in their basic form. The several solutions were poured onto clean glass plates and allowed to evaporate overnight. They were exposed to direct noontime sunlight for various periods of time (indicated in minutes) and their ranges of colors recorded as indicated in Table 9.

## TABLE 9

<table>
<tr><td><u>DYE</u></td><td>OBSERVED COLOR<br>(TIME IN MINUTES)<br><br>INITIAL/INTERMEDIATE/FINAL</td></tr>
</table>

| DYE | OBSERVED COLOR (TIME IN MINUTES)<br>INITIAL/INTERMEDIATE/FINAL |
|---|---|
| Alizarin, (3 mM) | violet(0)/dusty rose(5)/gold(30-180) |
| Alizarin yellow R | light yellow(0)/medium gold(30)/dark gold (90-180) |
| Alizarin red s | dusty pink(0)/orange-tan(30-180) |
| Benzopurpurin 4B | red(0 to 180) |
| 4,4'-bis(4-amino-1-naphthyl-azo)-<br>  2,2'-stilbene-disulfonic acid | violet(0)/red-brown(30-180) |
| Brasiline | turquoise(0)/lavender(5)/dusty rose(10)/orange-tan(30-180) |
| Bromocresol green | royal blue(0)/dark green(5-180) |
| Bromocresol purple | purple(0)/dark brown(5)/dark olive(30)/light olive(90-180) |
| Bromophenol blue | purple(0)/dark green-green(5-180) |
| Bromophenol red | red-brown(0)/golden brown(5)/brown(30-180) |
| Bromothymol blue | royal blue(0)/dark green(5)/gold(45-180) |
| Bromoxylenol blue, (3 mM) | dark blue(0)/dark green(5-180) |
| Carminic acid | pink-violet(0)/light pink(5)/coral(30-180) |
| Chlorophenol red | burgundy(0)/golden brown(5)/yellow(15-180) |
| Congo red | salmon(0)/subtle change to dark salmon at 180 |
| o-Cresolphthalein | initial color is unstable even in absence of illumination |
| m-Cresol purple | navy blue(0)/yellow(5)/gold(30-180) |
| Cresol red | burgundy(0)/golden brown(5)/gold(15-180) |
| Curcumin | reddish brown(0)/light yellow(5)/gold(30-180) |
| 3-(4-Dimethylamino-1-naphthyl-azo)-<br>  4-methoxybenzene-sulfonic acid | light yelow(0)/light tan(90-180) |
| 4-(4-Dimethylaminophenylazo benzoic acid | dye precipitates from solution |
| Direct red | electric magenta(0)/scarlet to scarlet-red(30-180) |
| Eriochrome black T | turquoise(0)/dark tan(15-180) |
| Erythrosin B, (2 mM) | burnt pink(0)/dark pink(5)/orange(30-180) |
| 4-(4-Ethoxyphenylazo)-3-phenylene-<br>  diamine hydrochloride | yellow(0)/light gold(5)/dark gold(15-180) |

EP 0 290 750 B1

**TABLE 9** (Continued)

| DYE | OBSERVED COLOR (TIME IN MINUTES) INITIAL/INTERMEDIATE/FINAL |
|---|---|
| Ethyl orange | gold(0)/dark gold(5)/orange(30-180) |
| Ethyl red | yellow(0)/light pink(5)/medium pink to reddish pink(10-180) |
| Ethyl violet | medium blue(0)/blue-grey(90-180) |
| Hematoxylin | beige(0)/light beige(5)/yellow-tan(30-180) |
| Lacmoid | grayish-turquoise(0)/dark brown(30-180) |
| Litmus | cornflower blue(0)/lavender(5)/ orange-tan(30-180) |
| Metanil yellow | yellow(0)/gold(90-180) |
| Methyl green | aqua blue(0)/aqua green(90-180) |
| Methyl red, (6 mM) | yellow(0)/orange(5)/red(10)/scarlet(30-180) |
| Naphtholphthalein | bismuth grey(0)/clear(5)/yellow-tan(30-180) |
| Naphthyl red hydrochloride | dye precipitates from solution |
| Neutral red, (3 mM) | orange-tan(0)/light red(5)/dark orange-tan(30-180) |
| Nile blue A | sky blue(0)/light green(10)/swamp green(30-180) |
| 2-Nitrophenol | dye degrades under ultraviolet illumination |
| 3-Nitrophenol | dye degrades under ultraviolet illumination |
| 4-Nitrophenol | dye degrades under ultraviolet illumination |
| Orange I | red(0)/orange(5-180) |
| 4-(Phenylazo)diphenylamine | light yellow(0)/light beige(90-180) |
| Phenol red | scarlet-red(0)/red(5)/gold(10-180) |
| Propyl red, (3 mM) | gold(0)/red(5)/scarlet-red(30-180) |
| Resazurin, (2 mM) | dark purple(0)/dark brown-red(5)/red(30)/dark orange(45-230) |
| Thiazole yellow G | yellow(0-180) |
| Thymol blue | light olive(0)/light gold(5)/dark gold(30-180) |
| Thymolphthaleine | initial color is unstable in absence of illumination |
| Tropaeoline OO | gold(0)/medium gold(30)/dark gold(90-180) |
| p-Xylenol blue | dark olive(0)/gold(5-180) |

Ortho-nitrobenzaldehyde is only slightly soluble in aqueous solutions. Therefore, in those applications in which it is advantageous to utilize greater than 10 mM ortho-nitrobenzaldehyde, an aqueous solution of sodium bisulfite may be used. Due to bisulfite interaction with aldehydes to form a bisulfite adduct, amounts of at least 500 mM ortho-nitrobenzaldehyde may be solubilized in these solutions.

Example 12 illustrates the preparation of aldehyde bisulfite adducts. Examples 13-16 relate to procedures wherein a necessarily high concentration of ortho-nitrobenzaldehyde bisulfite adduct is utilized which

EP 0 290 750 B1

is higher than the concentration obtainable without a solubilizing agent such as bisulfite. Examples 15-16 contain, in addition, the buffer, Tris-HCl.

**EXAMPLE 12**

The preparation of aldehyde bisulfite adducts is accomplished as follows. To 400 ml of a solution containing 20.9 grams sodium metabisulfite (550 mM) in water is added 30.2 grams ortho-nitrobenzaldehyde. The solution is stirred and brought to 60°C. The aldehyde dissolves slowly, and remains in solution after the temperature is lowered. In contrast, addition of the bisulfite to a heated suspension of the aldehyde in water does not result in a clear solution, nor does adding both aldehyde and bisulfite to heated water.

Similar procedures, applied to 2,4-dinitrobenzaldehyde, 3,5-dinitrobenzaldehyde, and o-nitrocinnamaldehyde, were effective in solubilizing these aldehydes up to a concentration of 50 mM.

**EXAMPLE 13**

Solutions were prepared as in Example 1 except that the ortho-nitrobenzaldehyde was added as a solution of its bisulfite adduct in a 10% excess of sodium bisulfite.

The concentration of ortho-nitrobenzaldehyde bisulfite adduct in the final solutions was 25 mM. All other concentrations were similar to those in Example 1. The pH of the solutions was adjusted as indicated in Table 10.

## TABLE 10

| INDICATOR DYE | microliters 1 M NaOH |
|---|---|
| 1. bromothymol blue | 40 |
| 2. ethyl red | 30 |
| 3. m-cresol purple | 50 |
| 4. neutral red | 50 |
| 5. chlorophenol red | 40 |
| 6. bromocresol green | 0 |
| 7. methyl red | 20 |
| 8. bromophenol red | 40 |
| 9. hematoxylin | 100 |
| 10. alizarin | 60 |
| 11. propyl red | 20 |
| 12. bromophenol blue | 0 |

**EXAMPLE 14**

Three 25 $\mu$L aliquots of the solutions of Example 13 are pipetted onto a glass plate and allowed to air dry for approximately 1 hour. The dried films are subjected to 0, 15 or 60 minutes of solar illumination on a clear February day in San Diego, CA. and the colors noted. The observed color changes are listed in Table 11.

13

## TABLE 11

OBSERVED COLOR

| INDICATOR DYE | Initial Color | 15 min. Sunlight | 60 min. Sunlight |
|---|---|---|---|
| 1. bromothymol blue | green | green-yellow | yellow |
| 2. ethyl red | yellow | red-yellow | red |
| 3. m-cresol purple | lilac | yellow | yellow |
| 4. neutral red | orange | orange | orange |
| 5. chlorophenol red | purple | yellow-purple | yellow |
| 6. bromocresol green | blue | lt. blue | green-yellow |
| 7. methyl red | yellow | yellow-red | red |
| 8. bromophenol red | purple | purple-yellow | yellow |
| 9. hematoxylin | red | orange | lt. yellow |
| 10. alizarin | lt. purple | v. lt. purple | lt. yellow |
| 11. propyl red | yellow | red-yellow | yellow-pink |
| 12. bromophenol blue | blue | blue | green-yellow |

**EXAMPLE 15**

To one-ml aliquots of the solutions of Example 13 is added 6 μL of 1 M Tris-HCl at pH 8.0. This is equivalent to 3 mM titratable Tris base in the final solutions. Three 25 μL aliquots of the resulting solutions are pipetted onto a glass plate and allowed to air dry. The drying is complete in one hour. The dried films are subjected to 0, 15, or 60 minutes of solar illumination on a clear February day in San Diego, CA. and the colors noted. The observed color changes are listed in Table 12.

14

## TABLE 12

OBSERVED COLOR

| INDICATOR DYE WITH 3 mM Tris-HCl | Initial Color | 15 min. Sunlight | 60 min. Sunlight |
|---|---|---|---|
| 1. bromothymol blue | blue-green | green | yellow |
| 2. ethyl red | yellow | yellow-red | red |
| 3. m-cresol purple | yellow-green | yellow-green | yellow |
| 4. neutral red | orange | orange | orange |
| 5. chlorophenol red | purple | purple | yellow |
| 6. bromocresol green | blue | blue | yellow-green |
| 7. methyl red | yellow | red-yellow | red |
| 8. bromophenol red | purple | purple | yellow |
| 9. hematoxylin | red | lt. red | lt. yellow |
| 10. alizarin | lt. purple | lt. purple | lt. yellow |
| 11. propyl red | yellow | yellow-red | yellow-pink |
| 12. bromophenol blue | blue | blue | green |

**EXAMPLE 16**

To one-ml aliquots of the solutions of Example 13 is added 16 $\mu$L of 1 M Tris-HCl at pH 8.0. This is equivalent to 8 mM titratable Tris base in the final solutions. Three 25 $\mu$L aliquots of the resulting solutions are pipetted onto a glass plate and allowed to air dry. The drying is complete in one hour. The dried films are subjected to 0, 15, or 60 minutes of solar illumination on a clear February day in San Diego, CA. and the colors noted. The observed color changes are listed in Table 13.

## TABLE 13

OBSERVED COLOR

| INDICATOR DYE WITH 8 mM Tris-HCl | Initial Color | 15 min. Sunlight | 60 min. Sunlight |
|---|---|---|---|
| 1. bromothymol blue | blue-green | blue-green | yellow |
| 2. ethyl red | yellow | yellow | red |
| 3. m-cresol purple | yellow-green | yellow-green | yellow |
| 4. neutral red | orange | orange | orange |
| 5. chlorophenol red | purple | purple | yellow |
| 6. bromocresol green | blue | blue | yellow-green |
| 7. methyl red | yellow | yellow | red |
| 8. bromophenol red | purple | purple | yellow |
| 9. hematoxylin | red | red | lt. yellow |
| 10. alizarin | lt. purple | lt. purple | lt. yellow |
| 11. propyl red | yellow | yellow | yellow-pink |
| 12. bromophenol blue | blue | blue | green |

Examples 17 and 18, relate to the advantageous use of buffering agents, such as Tris-HCl, or deoxycholate, to lenghten the time in which a color change is observed and to detect an increased amount of ultraviolet radiation.

**EXAMPLE 17**

To one-ml aliquots of the solutions described in Example 13, is added 6 $\mu$L of 1 M Tris-HCl at pH 8.0. This is equivalent to 3 mM titratable Tris base in the final solution. Three 25 $\mu$L aliquots of any one of the resulting solutions are pipetted onto a glass plate and allowed to air dry. The drying is complete in one hour. The dried films are subjected to 0, 15, or 60 minutes of solar illumination on a clear February day in San Diego, CA. and the colors noted. The observed color changes are listed in Table 14.

## TABLE 14

OBSERVED COLOR

| INDICATOR DYE WITH<br>3 mM Tris-HCl | Initial<br>Color | 15 min.<br>Sunlight | 60 min.<br>Sunlight |
|---|---|---|---|
| 1.  bromothymol blue | blue-green | green | green |
| 2.  ethyl red | yellow | yellow-red | red-yellow |
| 3.  m-cresol purple | yellow-green | yellow-green | yellow |
| 4.  neutral red | orange | orange | orange |
| 5.  chlorophenol red | purple | purple | purple |
| 6.  bromocresol green | blue | blue | lt-green-blue |
| 7.  methyl red | yellow | red-yellow | red-yellow |
| 8.  bromophenol red | purple | purple | purple |
| 9.  hematoxylin | red | lt. red | lt. brown |
| 10. alizarin | lt. purple | lt. purple | v. lt. purple |
| 11. propyl red | yellow | yellow-red | yellow-red |
| 12. bromophenol blue | blue | blue | blue |

### EXAMPLE 18

To one-ml aliquots of the solutions of Example 13 is added 16 $\mu$L of 1 mM Tris-HCl at pH 8.0. This is equivalent to 8 mM titratable Tris base in the final solution. Three 25 $\mu$L aliquots of any one of the resulting solutions are pipetted onto a glass plate and allowed to air dry. The drying is complete in one hour. The dried films are subjected to 0, 15, or 60 minutes of solar illumination on a clear February day in San Diego, CA. and the colors noted. The observed color changes are listed in Table 15.

## TABLE 15

OBSERVED COLOR

| INDICATOR DYE WITH 8 mM Tris-HCl | Initial Color | 15 min. Sunlight | 60 min. Sunlight |
|---|---|---|---|
| 1. bromothymol blue | blue-green | blue-green | blue-green |
| 2. ethyl red | yellow | yellow | yellow |
| 3. m-cresol purple | yel-green | yel-orange | yel-green |
| 4. neutral red | orange | orange | orange |
| 5. chlorophenol red | purple | purple | purple |
| 6. bromocresol green | blue | blue | blue |
| 7. methyl red | yellow | yellow | yellow |
| 8. bromophenol red | purple | purple | purple |
| 9. hematoxylin | red | red | lt. red |
| 10. alizarin | lt. purple | lt. purple | lt. purple |
| 11. propyl red | yellow | yellow | yellow-orange |
| 12. bromophenol blue | blue | blue | blue |

The following example, Example 19, demonstrates the retardant effect of sodium deoxycholate upon the acidification of the dye and also demonstrates the use of a liquid medium contained in a Saran™ plastic wrap support.

### EXAMPLE 19

A solution of 2-ethoxy-ethoxy-ethanol is made 1.0 M in ortho-nitrobenzaldehyde and 10 mM in bromothymol blue. The pH of the solution is adjusted to pH 9.2 by addition of 400 μL 1 M NaOH to a 22 ml volume of solution. At this pH, bromothymol blue has a deep blue-green color. A second solution is similarly prepared except that in addition it is made 100 mM in sodium deoxycholate. Mixture of these two solutions in proportions of 9:1 and 4:1 provides solutions respectively 10 mM and 20 mM in deoxycholate. These solutions, when exposed to direct sunlight undergo a color change to yellow in the following times: 0 deoxycholate, 5 minutes; 10 mM deoxycholate, ca. 20 minutes; and 20 mM deoxycholate, ca. 30 minutes.

Similar solutions, 25, 50, 75 and 100 mM in deoxycholate were sealed into adjacent segments between two sheets of heat sealable plastic using a hot wire. These sections changed color from dark blue-green to yellow in 22, 45, 80 and 120 minutes, respectively.

In a similar experiment employing chlorophenol red the color change from violet red to yellow occurred in 15, 30, 38 and 50 minutes at the progressively higher concentrations of deoxycholate.

The use of a pH adjuster for the purpose of extending the temporal elements of the color transitions possible for a particular dye is illustrated in the following example, Example 20. The addition of the pH adjuster differs from the addition of a buffer. While both a buffer and a strong base extend the time required for a color transition to occur, only a strong base will always alter the initial pH and corresponding initial color.

### EXAMPLE 20

Ten ml of 7.2% polyvinyl alcohol was made 1 mM in bromothymol blue and 50 mM in a bisulfite adduct of ortho-nitrobenzaldehyde. Addition of 100 μL of 1.0 M NaOH results in a color change from the yellow acid form of the dye to the blue basic form. An equivalent amount of titratable phosphate added to the original solution as a potassium phosphate buffer at pH 6, allows for the formulation of a film which will turn yellow after the same amount of illumination as the film to which sodium hydroxide was added, but which will be initially green rather than initially blue.

Examples 21, and 22 relate to systems which can be used for quantifying exposure to ultraviolet radiation in a variety of settings including persons or objects exposed to natural or artificial sources.

## EXAMPLE 21

A buffer, such as sodium deoxycholate, is applied in the form of a concentration gradient from 0 to 20 mM of across the long axis of a thin strip plastic backing coated with diethylaminoethyl cellulose. Several coats of a solution 8% in polyvinyl alcohol, 50 mM in ortho-nitrobenzaldehyde bisulfite adduct, 1 mM in bromothymol blue, and 10 mM in NaOH is applied with an aspirator type sprayer to the strip. Being more basic than the dye, the deoxycholate functions as a buffer and proportionally attenuates the appearance of a color change progressively from one end of the strip to the other. Graduations written across the top of the strip indicate ultraviolet exposure and are read by their alignment with the interface between the basic and acidic colors of the dye.

Alternatively, one or more dyes, or the buffer, are deposited in various patterns to provide for more complex and/or visually appealing responses to light. By use of a computer controlled printing process for deposition of buffer and/or dyes, considerable complexity can be generated including graphic and alphanumeric patterns.

## EXAMPLE 22

In this example embodiments are described useful for measuring the amount of incident ultraviolet light over an extended period of time by the juxtaposition of variously reactive formulations.

Each formulation may contain the same dye; however, for visual interest several dyes may be used. Each formulation has a proportionally greater amount of buffer, and so is more or less reactive. The formulations can be cut into squares for example or any other suitable shape. Various polyvinyl alcohol formulations are prepared, as previously described in Examples 17 and 18, each containing for example a two-fold increase in the amount of buffer present. That is, the first formulation contains X amount; the second contains 2X; the third, 4X; the fourth, 8X; and up to 512X if, for example, ten formulations are chosen. One or more dyes may be used and appropriate color standards are provided for each dye employed. Numbers beside each progressively more heavily buffered square indicate how much ultraviolet radiation is required to cause a change of color and the total exposure is readily discerned by comparing the test squares to the standard squares.

Three rows of squares, cut from different polyvinyl alcohol formulations, are applied to a plastic strip. One of the outer rows represents the standard color for each dye in its initial/basic color state and the other outer row represents the standard color for each dye in its final/acidic stage. The middle row is the test row which changes color to an extent dependent upon the amount of incident ultraviolet light exposure. As the amount of exposure increases, the number of squares which have changed color from the initial to final color will increase. The total number of squares which have changed color is a direct indication of the total amount of exposure to ultraviolet light.

The devices described in Examples 21 and 22, may be supplied in light secure packaging from which they are removed and applied to a surface, such as skin or clothing, by means of an adhesive backing which is exposed by removing a protective film, not unlike a self-adhesive bandage. Alternatively, the devices described above may be applied through use of other means such as badges or bracelets having slots which receive and protect the devices.

Alternatively the devices may be coated on the sun-ward surface with a material, such as collagen, which has an affinity, quantitatively similar to that of human skin, for one or more brands of commercial sunscreen ointment. Sunscreen is applied to the device so that the device can thereby be used to monitor the effectiveness of the ultraviolet blocking action of residual sunscreen even as it is being washed or worn off over extended periods.

The following example, Example 23, illustrates a procedure for making phototranschromic inks which can be effectively used on a variety of surfaces such as cloths, papers, cardboards, and other receptive surfaces, and which can be adapted for a variety of commercial and industrial applications where it is advantageous to create phototranschromic effects.

## EXAMPLE 23

An ink was compounded in the following manner. An aqueous solution containing 20% diethylene glycol and 0.8% polyvinyl alcohol was made 200 mM in the bisulfite adduct of ortho-nitrobenzaldehyde, 10 mM in bromophenol blue and 20 mM in NaOH. When applied to paper with a brush, the ink adhered smoothly and dried rapidly. The color was deep blue which changed through green to yellow under direct solar illumination for about half an hour.

Alternatively, multiple inks or paints can be made to all initially appear the same color, but which upon subsequent exposure to ultraviolet light develop multiple colors. These inks may be prepared as in Example 23, using any single dye or appropriate combination of dyes as in Example 24.

The following example illustrates the use of a pH sensitive dye in combination with a relatively pH insensitive dye to modify the initial and final color states obtainable.

## EXAMPLE 24

Xylene cyanol, a relatively pH insensitive blue dye is combined with ethyl orange, a pH sensitive dye, yellow in its basic state and red in its acidic state. An 8.5% solution of polyvinyl alcohol is made 50 mM in the bisulfite adduct of ortho-nitrobenzaldehyde and 10 mM in NaOH. Dyes are added in the concentrations listed below and the solutions are applied to glass plates and allowed to evaporate into thin films. The films are exposed to direct sunlight for 90 minutes and the initial and final colors are as listed in Table 16.

## TABLE 16

| Ethyl orange | Xylene cyanol | Colors Initial/Final |
|---|---|---|
| 1.0 mM | 1.0 mM | bright med. green/ smokey purple |
| 1.0 mM | 0.5 mM | bright med. green/ greenish purple |
| 1.0 mM | 0.2 mM | light blue-green/ reddish green |
| 0.2 mM | 0.2 mM | yellow-green/ light burgundy |

Plastics can be formed or molded into various shapes, such as toys, which upon subsequent exposure to ultraviolet light develop multiple colors. The following example describes a method for constructing three-dimensional silicone objects the color of which can be transformed by ultraviolet light.

## EXAMPLE 25

To 100 ml of Petrarch SS curable silicone dispersion (Petrarch Systems, Inc., Bristol, Pennsylvania) was added 750 mg ortho-nitrobenzaldehyde, and a solution consisting of 1 ml of 100 mM chlorophenol red in ethanol to which had been added 1 ml of 1.0 M NaOH. The thick dispersion was a deep reddish-purple and was placed in a 500 ml beaker for several days after which it was dry, firm, and pliable and could be easily cut with a sharp blade. Several geometrical shapes were cut from this material and when illuminated with ultraviolet radiation for an hour the illuminated surface changed color from purple to yellow.

Example 26 relates to phototranschromic materials which can be used in conjunction with photographic negatives or transparencies to produce modified images wherein contours and shapes in the photographic image are rendered in the phototranschromic materials into colors which are inherent in the phototranschromic material.

**EXAMPLE 26**

Images can be prepared in which negatives or transparencies are placed on a sheet of the ultraviolet reactive materials and exposed to ultraviolet light. The ultraviolet light is selectively transmitted depending upon the image present in the negative or transparency so that color changes will only occur where the ultraviolet light is transmitted.

A black and white 35 mm negative developed from an exposure of Kodak™ Tri-X film is held in place between a section of the film described in Example 14 and a source of ultraviolet illumination for thirty minutes. A clearly defined image is produced on the phototranschromic film wherein the darker areas of the Kodak™ negative are rendered in reddish browns, the lighter parts of the Kodak™ negative are rendered in yellow and the grey tones are rendered in intermediate shades.

The following example, Example 27, demonstrates the use of phototranschromic films to create images of various three-dimensional templates juxtaposed between the film and a source of ultraviolet illumination.

**EXAMPLE 27**

One hundred ml of a solution of 8% polyvinyl alcohol, 50 mM in the bisulfite adduct of ortho-nitrobenzaldehyde and 10 mM in NaOH is poured onto a glass plate and allowed to evaporate for 16 hours. The dried film covers 700 square centimeters and is dark red-brown. A section of the film is placed on the flat surface in direct sunlight for 30 minutes with a coiled wire on its sunward side. The shadow of the coil leaves a relatively unchanged red-brown image on a background which turns yellow. The image is sharp and stable after the film is removed from the sunlight.

The use of a crystalline bisulfite adduct of ortho-nitrobenzaldehyde, rather than the adduct prepared in situ as described in Example 12, requires an extra preparative step but confers several advantages. First, the crystallized material represents a relatively purified source of ortho-nitrobenzaldehyde as compared to the commercially available aldehyde. Second, the ratio of aldehyde to bisulfite is fixed by the stoichiometry of the chemical interaction rather than a weighing operation, and is therefore more reliably reproducible. Third, no excess of bisulfite (which acts as a buffer in certain pH ranges) is required to produce a clear solution, as is necessary in the case of the in situ preparation of the adduct as described in Example 12. Example 28 relates to the preparation and use of a crystalline ortho-nitrobenzaldehyde bisulfite adduct which can be used in all of the previous examples to replace in situ generated ortho-nitrobenzaldehyde bisulfite adduct.

**EXAMPLE 28**

A. Preparation of Crystalline Bisulfite Adduct:

To prepare the ortho-nitrobenzaldehyde bisulfite adduct, approximately equal molar amounts of sodium bisulfite and ortho-nitrobenzaldehyde are used. For example, one hundred grams of sodium bisulfite are dissolved in 200 ml of water, at room temperature. A mixture of 132 grams of ortho-nitrobenzaldehyde in 100 ml ethanol is dissolved by heating and is immediately added with stirring to the sodium bisulfite solution. The solution of ortho-nitrobenzaldehyde and bisulfite is protected from light and left overnight at room temperature to crystallize. The light straw-colored crystals are filtered and rinsed with ethanol prior to drying at room temperature.

B. Use of Crystalline Bisulfite Adduct:

To 1000 ml of an 8% polyvinyl alcohol solution is added 6.37 g of ortho-nitrobenzaldehyde sodium bisulfite crystals (25 mM) (as prepared in part A), 258 mg of methyl green (Eastman Kodak, Rochester, New York) dissolved in 10 ml of $H_2O$ (0.5 mM) and 20 ml of 1.0 M NaOH (2 mM). The solution is mixed and poured onto a clean glass plate and allowed to dry at room temperature, at approximately 60% relative humidity, for 24-48 hours or until dry to the touch. Upon exposure to UV light, the film undergoes a color change from light blue to a deep forest green.

The following example, Example 29 relates to the preparation of multilaminate films. There are multiple advantages to using an arrangement, such as a laminate, of two separately produced layers of film rather than combining several dyes in the same active layer. One is that the multiple dyes can be initially set to a different pH. Second, buffers can be added independently to either layer to prolong or shorten the color transition period. Third, the shielding of lower layer(s) from ultraviolet radiation by upper layer(s) causes a differential rate of activation to occur in the different lower layers.

## EXAMPLE 29

A solution of 8% polyvinyl alcohol, 25 mM in the crystalline bisulfite adduct of ortho-nitrobenzaldehyde and 0.5 mM in bromophenol blue is brought to pH 4.4 with 1 M NaOH and poured (cast) onto a clean glass plate. A second solution of 8% polyvinyl alcohol, 25 mM in the bisulfite adduct of ortho-nitrobenzaldehyde and 0.15 mM in methyl orange is brought to pH 4.6 with 1 M NaOH and poured (cast) onto a second clean glass plate. Both solutions are allowed to evaporate at room temperature and at approximately 60% relative humidity for 24-48 hours until dry to the touch. The two types of film thus produced can be laminated together using, for example, a clear polyethylene film coated on both sides with acrylic adhesive. The lamination can also be accomplished in other ways; for instance a thin layer of an acetone solution of polyvinylacetate may serve to join two polyvinyl alcohol films together.

Next, the methyl orange side, for example, of the compound film thus produced is attached to a white vinyl backing coated with a similar adhesive. This assembly, when subjected to varying amounts of UV radiation, e.g., from 1.5 to 10 Joules/cm$^2$, changes from an initial color of medium blue, to light green, to clear yellow, to light orange, to orange-red. Similar laminations or juxtapositions, using two or more layers of other films, prepared as described in the previous examples, have been produced with similarly effective results.

The choice of film thickness depends upon a balancing of at least two factors including: i) the advantageous shorter drying times associated with using more dilute solutions for thinner films and ii) the concomitant decreased optical density of thinner films and resultant decreased color intensity. Very thin films, for example thinner than 10 microns, are easier to manufacture in a continuous process due to their shorter drying times. High dye concentrations, to compensate for the decreased optical density, of up to 10 mM, surprisingly can be used, as described in Example 30, without altering the other components of the system.

## EXAMPLE 30

An aqueous solution 4% in polyvinyl alcohol, 25-50 mM in the bisulfite adduct of ortho-nitrobenzaldehyde, and from 0.1 to 10 mM in aniline blue and from 0.1 to 10 mM in phenol red, preferably in a ratio of aniline blue to phenol red of 2 to 5, and 10 mM in NaOH, is poured onto a glass plate. The solution is spread into a layer, ca. 100 microns thick, and is allowed to dry into a layer ca. 10 microns thick. The film thus produced is a reddish purple initially and upon ultraviolet irradiation changes through orange to yellow and finally to green. Prior to removal from the glass plate, the thin film is attached to a white vinyl adhesive backing to protect it from mechanical deformation upon separation and during later handling. A thin layer of Mylar™, or some other moisture barrier, is attached via an acrylic adhesive transfer tape to the unbacked side of the film to further protect it.

## EXAMPLE 31

It has been observed that, for certain dyes, a discoloration of the post-ultraviolet irradiation color sometimes occurs. To prevent this post-irradiation discoloration, it has been found that a suitable anti-oxidant, such as hexamethylenetetramine (.02 to .05% w/v) can be added to the film formulations prior to casting to prevent this discoloration. It has also been found that some anti-oxidants, including ascorbate, nordihydroguaretic acid, and gelatin, are suitable for this pruposes.

The foregoing illustrative examples relate to systems responsive to and for visualization of ultraviolet radiation. While the present invention has been described in terms of specific methods and compositions, it is understood that variations and modifications will occur to those skilled in the art upon consideration of the present invention.

For example, it is envisioned that various compounds capable of generating a proton upon exposure to ultraviolet light will be effective according to the present invention. Although the preferred compounds are ortho-nitrobenzaldehyde; 2,4-nitrobenzaldehyde; ortho-nitrocinnamaldehyde; and 2,6-dinitrobenzaldehyde; it is not intended to preclude others such as any aromatic ortho-nitro formyl compound or any other effective compound from being included in the scope of the present invention.

Inasmuch as other aromatic ortho-nitro formyl compounds, are classified with ortho-nitrobenzaldehyde as regards their ability to generate protons upon exposure to ultraviolet radiation, and are, therefore, likely to be similarly effective, it is intended that these substances be included within the scope of the present invention as well.

The foregoing examples demonstrate the utility of dyes such as Alizarin, Alizarin yellow R, Alizarin red s, Benzopurpurin 4B, 4,4′-bis(4-amino-1-naphthyl-azo)-2,2′-stilbene-disulfonic acid, Brasiline, Bromocresol green, Bromocresol purple, Bromophenol blue, Bromophenol red, Bromothymol blue, Bromoxylenol blue, Carminic acid, Chlorophenol red, Congo red, m-Cresol purple, Cresol red, Curcumin, 3-(4-Dimethylamino-1-naphthyl-azo)-4-methoxybenzene-sulfonic acid, Direct red, Eriochrome black T, Erythrosin B, 4-(4-Ethoxy-phenylazo)-3-phenylene-diamine hydrochloride, Ethyl orange, Ethyl red, Ethyl violet, Hematoxylin, Lacmoid, Litmus, Metanil yellow, Methyl green, Methyl red, Naphtholphthalein, Neutral red, Nile blue A, Orange I, 4-(Phenylazo)diphenylamine, Phenol red, Propyl red, Resazurin, Thiazole yellow G, Thymol blue, Tropaeoline OO, and p-Xylenol blue. It is envisioned that other dyes will prove to be equally effective. Such other dyes include, for example those listed in Kodak Laboratory Chemicals, catalogue No. 52 (July 1, 1985) pages 615-620 or other similar sources. Accordingly, it is intended that these other dyes be included within the scope of the invention.

Additionally, it is intended that media, other than polyvinyl alcohol, polyvinyl acetate, 2-ethoxy-ethoxy-ethanol, diethylene glycol, and silicone will prove to be equally effective in the formation of films, fibers, inks, paints, and the like. Such other media include multiple natural, semi-synthetic, synthetic, organic, or inorganic polymers. It is accordingly intended that these other media be included within the scope of the present invention.

In addition, although bisulfite is described as the compound used to increase the solubility of the photoacid progenitor, other compounds, such as bisulfite derivatives, surfactants, or other compounds capable of increasing solubility, are to be included within the scope of the invention.

It is anticipated that buffering agents other than Tris-HCl, deoxycholate, or phosphates will prove to be equally effective in functioning as buffers. Such other buffering agents include any with a pK greater than the particular dye employed, such as, amines, piperidine, purine, proline, and the like. Therefore, it is intended that these are included in the scope of the present invention.

It is anticipated that pH adjusters other than sodium hydroxide, will prove to be equally effective in functioning as pH adjusters such as any strong base including potassium hydroxide, calcium hydroxide and the like. Similarly, it is anticipated that anti-oxidants other than hexamethylenetetramine will prove to be equally effective. Therefore, it is intended that these are included in the scope of the present invention.

It will be understood that a variety of techniques may alternatively be applied to provide various materials with the above properties which can be cast into films, extruded into fibers, molded into shapes, formulated as inks, paints, and the like. In addition, it will be understood that various modifications in format can be employed to measure the amount of incident ultraviolet light over a specified period of time.

Numerous modifications and variations in the invention as described in the above illustrative examples are expected to occur to those skilled in the art and consequently only such limitations as appear in the appended claims should be placed thereon.

Accordingly, it is intended in the appended claims to cover all such equivalent variations which come within the scope of the invention as claimed.

## Claims

1. A film that changes colour upon exposure to ultraviolet radiation and is formable upon drying of an aqueous solution comprising a dispersion agent, at least one acid-sensitive dye and a photogenerated acid progenitor that is convertible into an acid upon exposure to ultraviolet radiation, characterized in that the photogenerated acid progenitor comprises a bisulfite adduct of an ortho-nitro-substituted aromatic aldehyde.

2. A film as in Claim 1, wherein the photogenerated acid progenitor is a bisulfite adduct of ortho-nitrobenzaldehyde.

3. A film as in Claim 2 wherein the aqueous solution has a basic pH and comprises:
   i) about 6 weight percent of polyvinyl alcohol;
   ii) about 0.06 to about 0.10 weight percent of an acid-sensitive dye; and
   iii) about 1.2 to about 2.5 weight percent of the sodium bisulfite adduct of ortho-nitrobenzaldehyde.

4. A film as in any one of Claims 1 to 3, wherein the solution further comprises a surfactant.

**5.** A film as in any one of Claims 1 to 4, wherein the dispersion agent is selected from the group consisting of polyvinyl alcohol, ethoxy-ethoxy-ethanol, polyvinylacetate, a silicone, diethylene glycol, and diethylaminoethyl cellulose.

**6.** A film as in any one of Claims 1 to 5, wherein the acid-sensitive dye is selected from the group consisting of bromothymol blue, propyl red, ethyl red, m-cresol purple, bromophenol blue, phenol red, and methyl green.

**7.** An actinometric device that indicates cumulative exposure to ultraviolet radiation comprising:
(a) a film that changes colour upon exposure to ultraviolet radiation and is formable upon drying of an aqueous solution comprising:
i) a dispersion agent;
ii) at least one acid-sensitive dye;
iii) a surfactant; and
iv) a photogenerated acid progenitor that is convertible into a photoacid upon exposure to ultraviolet radiation; and
(b) a moisture barrier proximate said film, wherein the photogenerated acid progenitor comprises a bisulfite adduct of an ortho-nitro-substituted aromatic aldehyde.

**8.** An actinometric device as in Claim 7, wherein the photogenerated acid progenitor is a bisulfite adduct of ortho-nitrobenzaldehyde.

**9.** An actinometric device as in Claim 9, wherein the aqueous solution has a basic pH and comprises:
i) about 6 weight percent of polyvinyl alcohol;
ii) about 0.06 to about 0.10 weight percent of an acid-sensitive dye; and
iii) about 1.2 to about 2.5 weight percent of the sodium bisulfite adduct of ortho-nitrobenzaldehyde.

**10.** An actinometric device as in any one of Claims 7 to 9, further comprising a graduated indicating means proximate said film.

**11.** An actinometric device as in any one of Claims 7 to 10 further comprising means to affix the device to a surface.

**12.** An actinometric device as in Claim 11 wherein said affixing means is an adhesive backing, badge, bracelet, or adhesive-backed laminate.

**13.** An actinometric device as in any one of Claims 7 to 12, wherein the dispersion agent is selected from the group consisting of polyvinyl alcohol, ethoxy-ethoxy-ethanol, polyvinylacetate, a silicone, diethylene glycol, and diethylaminoethyl cellulose.

**14.** An actinometric device as in any one of Claims 7 to 13, wherein the acid-sensitive dye is selected from the group consisting of bromothymol blue, propyl red, ethyl red, m-cresol purple, bromophenol blue, phenol red, and methyl green.

**Patentansprüche**

**1.** Film, der seine Farbe bei Bestrahlung durch ultraviolette Strahlung verändert und herstellbar ist durch Trocknung einer wässrigen Lösung, die ein Dispersionsmittel, wenigstens einen säureempfindlichen Farbstoff und einen Vorläufer für eine durch Licht erzeugte Säure umfaßt, der bei Bestrahlung durch ultraviolette Strahlung in eine Säure überführbar ist, dadurch gekennzeichnet, daß der Vorläufer für eine durch Licht erzeugte Säure ein Bisulfit-Addukt eines ortho-nitro-substituierten aromatischen Aldehyds umfaßt.

**2.** Film nach Anspruch 1, wobei der Vorläufer für eine durch Licht erzeugte Säure ein Bisulfit-Addukt von ortho-Nitrobenzaldehyd ist.

**3.** Film nach Anspruch 2, wobei die wässrige Lösung einen basischen pH hat und:
i) etwa 6 Gewichtsprozent Polyvinylalkohol;

ii) etwa 0,06 bis etwa 0,10 Gewichtsprozent eines säureempfindlichen Farbstoffs; und

iii) etwa 1,2 bis etwa 2,5 Gewichtsprozent des Natriumbisulfit-Addukts von ortho-Nitrobenzaldehyd umfaßt.

4. Film nach einem der Ansprüche 1 bis 3, wobei die Lösung außerdem ein Tensid umfaßt.

5. Film nach einem der Ansprüche 1 bis 4, wobei das Dispersionsmittel ausgewählt ist aus der Gruppe, die aus Polyvinylalkohol, Ethoxyethoxyethanol, Polyvinylacetat, einem Silikon, Diethylenglykol und Diethylaminoethylcellulose besteht.

6. Film nach einem der Ansprüche 1 bis 5, wobei der säureempfindliche Farbstoff ausgewählt ist aus der Gruppe, die aus Bromthymolblau, Propylrot, Ethylrot, m-Kresolpurpur, Bromphenolblau, Phenolrot und Methylgrün besteht.

7. Aktinometrische Vorrichtung, die kumulative Bestrahlung durch ultraviolette Strahlung anzeigt, umfassend:

(a) einen Film, der bei Bestrahlung durch ultraviolette Strahlung seine Farbe verändert und herstellbar ist durch Trocknung einer wässrigen Lösung, die:

i) ein Dispersionsmittel;

ii) wenigstens einen säureempfindlichen Farbstoff;

iii) ein Tensid; und

iv) einen Vorläufer für eine durch Licht erzeugte Säure, der bei Bestrahlung durch ultraviolette Strahlung in eine Photosäure überführbar ist,

umfaßt und

(b) eine Feuchtigkeitssperre unmittelbar benachbart zu besagten Film,

wobei der Vorläufer für eine durch Licht erzeugte Säure ein Bisulfit-Addukt eines ortho-nitro-substituierten aromatischen Aldehyds umfaßt.

8. Aktinometrische Vorrichtung nach Anspruch 7, wobei der Vorläufer für eine durch Licht erzeugte Säure ein Bisulfit-Addukt von ortho-Nitrobenzaldehyd ist.

9. Aktinometrische Vorrichtung nach Anspruch 8, wobei die wässrige Lösung einen basischen pH hat und:

i) etwa 6 Gewichtsprozent Polyvinylalkohol;

ii) etwa 0,06 bis 0,10 Gewichtsprozent eines säureempfindlichen Farbstoffs; und

iii) etwa 1,2 bis etwa 2,5 Gewichtsprozent des Natriumbisulfit-Addukts von ortho-Nitrobenzaldehyd umfaßt.

10. Aktinometrische Vorrichtung nach einen der Ansprüche 7 bis 9, die außerdem ein mit Einteilung versehenes Anzeigemittel unmittelbar benachbart zu besagtem Film umfaßt.

11. Aktinometrische Vorrichtung nach einem der Ansprüche 7 bis 10, die außerdem ein Mittel zur Befestigung der Vorrichtung an einer Oberfläche umfaßt.

12. Aktinometrische Vorrichtung nach Anspruch 11, wobei besagtes Befestigungsmittel ein Kleberücken, eine Ansteckvorrichtung, ein Armband oder ein Laminat mit Kleberücken ist.

13. Aktinometrische Vorrichtung nach einen der Ansprüche 7 bis 12, wobei das Dispersionsmittel ausgewählt ist aus der Gruppe, die aus Polyvinylalkohol, Ethoxyethoxyethanol, Polyvinylacetat, einem Silikon, Diethylenglykol und Diethylaminoethylcellulose besteht.

14. Aktinometrische Vorrichtung nach einem der Ansprüche 7 bis 13, wobei der säureempfindliche Farbstoff ausgewählt ist aus der Gruppe, die aus Bromthymolblau, Propylrot, Ethylrot, m-Kresolpurpur, Bromphenolblau, Phenolrot und Methylgrün besteht.

**Revendications**

1. Film qui change de couleur lors d'une exposition à une radiation ultraviolette et peut être formé lors du séchage d'une solution aqueuse comprenant un agent de dispersion, au moins un colorant sensible à un acide et un précurseur acide photo-engendré qui est convertible en un acide lors de l'exposition à une radiation ultraviolette,

caractérisé en ce que le précurseur acide photo-engendré comprend un additif bisulfite d'un aldéhyde aromatique ortho-nitro-substitué.

**2.** Film selon la revendication 1,

dans lequel le précurseur acide photo-engendré est un additif bisulfite d'ortho-nitrobenzaldéhyde.

**3.** Film selon la revendication 2,

dans lequel la solution aqueuse présente un pH basique et comprend :

    i) environ 6% en poids d'alcool de polyvinyle ;

    ii) environ 0,06% à environ 0,10% en poids d'un colorant sensible à un acide ; et

    iii) environ 1,2% à environ 2,5% en poids de l'additif bisulfite de sodium d'ortho-nitrobenzaldéhyde.

**4.** Film selon une quelconque des revendications 1 à 3,

dans lequel la solution comprend de plus un tensio-actif.

**5.** Film selon une quelconque des revendications 1 à 4,

dans lequel l'agent de dispersion est choisi à partir du groupe comprenant l'alcool de polyvinyle, l'éthoxy-éthoxy-éthanol, l'acétate de polyvinyle, une silicone, le diéthylèneglycol, et la cellulose de diéthylaminoéthyle.

**6.** Film selon une quelconque des revendications 1 à 5,

dans lequel le colorant sensible à un acide est choisi à partir du groupe comprenant le bleu de bromothymol, le rouge de propyle, le rouge d'éthyle, le pourpre de m-crésol, le bleu de bromophénol, le rouge de phénol et le vert de méthyle.

**7.** Dispositif actinométrique qui indique l'exposition cumulative à une radiation ultraviolette, comprenant :

    a) un film qui change de couleur lors de l'exposition à une radiation ultraviolette et peut être formé lors du séchage d'une solution aqueuse comprenant :

        i) un agent de dispersion ;

        ii) au moins un colorant sensible à un acide ;

        iii) un tensio-actif ; et

        iv) un précurseur acide photo-engendré qui est convertible en un photo-acide lors de l'exposition à une radiation ultraviolette ; et

    b) une barrière d'humidité à proximité dudit film dans lequel le précurseur acide photo-engendré comprend un additif bisulfite d'un aldéhyde aromatique ortho-nitro-substitué.

**8.** Dispositif actinométrique selon la revendication 7,

dans lequel le précurseur acide photo-engendré est un additif bisulfite d'ortho-nitrobenzaldéhyde.

**9.** Dispositif actinométrique selon la revendication 8,

dans lequel la solution aqueuse présente un pH basique et comprend :

    i) environ 6% en poids d'alcool de polyvinyle ;

    ii) environ 0,06% à environ 0,10% en poids d'un colorant sensible à un acide ; et

    iii) environ 1,2% à environ 2,5% en poids de l'additif bisulfite de sodium d'ortho-nitrobenzaldéhyde.

**10.** Dispositif actinométrique selon une quelconque des revendications 7 à 9, comprenant de plus des moyens indicatifs gradués à proximité dudit film.

**11.** Dispositif actinométrique selon une quelconque des revendications 7 à 10, comprenant de plus des moyens pour fixer le dispositif à une surface.

**12.** Dispositif actinométrique selon la revendication 11,

dans lequel lesdits moyens de fixation sont un support adhésif, un badge, un bracelet, ou un lamifié à dos adhésif.

**13.** Dispositif actinométrique selon une quelconque des revendications 7 à 12,

dans lequel l'agent de dispersion est choisi à partir du groupe comprenant l'alcool de polyvinyle, l'éthoxy-éthoxy-éthanol, l'acétate de polyvinyle, une silicone, le diéthylèneglycol, et la cellulose de diéthylaminoéthyle.

**14.** Dispositif actinométrique selon une quelconque des revendications 7 à 13,
dans lequel le colorant sensible à un acide est choisi à partir du groupe comprenant le bleu de bromothymol, le rouge de propyle, le rouge d'éthyle, le pourpre de m-crésol, le bleu de bromophénol, le rouge de phénol et le vert de méthyle.